# DEMANDE DE BREVET EUROPEEN

(11) **EP 4 443 815 A1**
(43) Date de publication de la demande: **09.10.2024**
(21) Numéro de dépôt: 24168377.0
(22) Date de dépôt: 04.04.2024
(51) Int. Cl.: H04L 9/32

(54) **SYSTEME ELECTRONIQUE A AUTHENTIFICATION TRIPARTITE ENTRE UN UTILISATEUR, UN CAPTEUR ET LE SYSTEME ELECTRONIQUE**

(30) Priorité: 05.04.2023 FR 2303377
(71) Demandeur: Commissariat à l'énergie atomique et aux énergies alternatives, 75015 Paris (FR)
(72) Inventeur: RASCLE, Angélique, 38054 GRENOBLE CEDEX 09 (FR); PEBAY-PEYROULA, Florian, 38054 GRENOBLE CEDEX 09 (FR)
(74) Mandataire: Brevalex

(57) **Abrégé**

Système électronique (100) réalisant une authentification de type défi-réponse d'un utilisateur (107) et d'un capteur (104), comprenant :
- le capteur authentifiant l'utilisateur et comprenant une PUF ;
- un dispositif mémoire (106) mémorisant des données d'identification valide de l'utilisateur et du capteur ;
- un calculateur (102) ;
le système électronique étant configuré pour :
- mettre en oeuvre l'authentification de type défi-réponse du capteur, dans laquelle des données de réponse du capteur sont générées par la PUF du capteur, puis
- lorsque le capteur est authentifié comme étant valide, mettre en oeuvre l'authentification de type défi-réponse de l'utilisateur, pendant laquelle des données échangées entre le calculateur et le capteur sont chiffrées en utilisant une première clé de chiffrement calculée à partir de données de défi du capteur et des données de réponse du capteur, la première clé de chiffrement étant partagée entre le calculateur et le capteur.

## Description

### DOMAINE TECHNIQUE DE L'INVENTION

Le domaine de l'invention est celui de la sécurisation des données, et notamment celui des systèmes électroniques dotés de capteurs de mesure d'authentification d'utilisateurs de ces systèmes et dans lesquels une sécurisation importante des données traitées est requise.

### ÉTAT DE LA TECHNIQUE

Les systèmes électroniques embarqués sont de plus en plus proches des utilisateurs, voire embarqués sur ces utilisateurs comme c'est le cas par exemple pour les montres connectées, pour les lunettes de réalité augmentée, virtuelle ou mixte, etc. De ce fait, ces systèmes sont susceptibles de mesurer des paramètres propres aux utilisateurs et pouvant être considérés comme personnels et/ou confidentiels par l'utilisateur. Par exemple, les montres connectées ou les lunettes de réalité étendue peuvent mesurer des paramètres physiques à partir desquels il est possible d'extraire des informations, ou fonctions, considérées comme critiques ou sensibles, telles que des informations physiologiques pouvant indiquer un état de fatigue, de stress, un état mental ou émotionnel, ou encore un état de santé de l'utilisateur. Les paramètres mesurés peuvent également être utilisés pour générer des informations d'aide ou afficher des informations d'action ou d'aide à la décision que l'utilisateur doit réaliser, par exemple dans une situation d'urgence. Dans ce cadre, il est intéressant de proposer et d'instaurer un important niveau de confiance entre l'utilisateur et les informations affichées par le système, surtout dans les situations d'urgence afin que l'utilisateur n'ai aucun doute sur la fiabilité sur ces informations.

Le document US 2017/111356 A1 décrit un système électronique dans lequel une authentification de l'utilisateur est assurée par deux mesures biochimiques comparées à des bases de données de mesures réalisées au préalable sur l'utilisateur. Un tel système ne propose toutefois pas une sécurité optimale des données traitées car il n'assure pas l'intégrité des mesures réalisées sur toute la chaîne d'exploitation du système électronique traitant ces mesures.

Le document US 2019/312740 A1 traite de la sécurisation de capteurs se basant sur l'utilisation de PUF (« Physical Unclonable Function » en anglais, ou fonction physique non-clonable) générée à partir de données d'un premier capteur calibré. Un second capteur non calibré est également utilisé, et la PUF générée est comparée avec une base de données de PUFs d'identification du capteur. Les données utilisées pour la génération de la PUF peuvent correspondre à des signaux physiques ou chimiques obtenus dans le premier capteur. Ce document ne propose pas de système dans lequel une authentification de l'utilisateur est sécurisée sur toute la chaîne d'exploitation du système traitant les mesures d'authentification réalisées.

### EXPOSÉ DE L'INVENTION

La présente invention vise à remédier à tout ou partie des inconvénients de l'état de la technique cités ci-dessus, et en particulier à proposer un système électronique doté d'un capteur de mesure d'authentification d'un utilisateur et dans lequel la chaîne de traitement des données de mesure destinées à être obtenues de l'utilisateur soit complètement sécurisée.

Pour cela, il est proposé un système électronique configuré pour réaliser une authentification de type défi-réponse (ou « challenge-response » en anglais) d'un utilisateur et d'un capteur, comprenant au moins :
- le capteur qui est configuré pour réaliser au moins une mesure d'authentification de l'utilisateur et comprenant une PUF ;
- un dispositif mémoire configuré pour mémoriser au moins des données d'identification valide de l'utilisateur et des données d'identification valide du capteur destinées à être obtenues préalablement à l'authentification de type défi-réponse de l'utilisateur ;
- un calculateur configuré pour communiquer avec le capteur et le dispositif mémoire, et pour traiter des données destinées à être envoyées par le capteur et le dispositif mémoire au calculateur ;
le système électronique étant configuré pour :
- mettre en oeuvre l'authentification de type défi-réponse du capteur, dans laquelle des données de réponse du capteur sont destinées à être générées par la PUF du capteur, puis
- lorsque le capteur est authentifié comme étant valide, c'est-à-dire comme étant le capteur qui est bien destiné à réaliser la ou les mesures d'authentification de l'utilisateur, mettre en oeuvre l'authentification de type défi-réponse de l'utilisateur, pendant laquelle des données destinées à être échangées entre le calculateur et le capteur sont chiffrées en utilisant une première clé de chiffrement calculée à partir de données de défi du capteur et des données de réponse du capteur, la première clé de chiffrement étant destinée à être partagée entre le calculateur et le capteur.

Le système électronique proposé réalise tout d'abord une authentification du capteur de mesure qui va être utilisé pour authentifier l'utilisateur, cette authentification du capteur faisant appel à une PUF du capteur afin d'obtenir une grande fiabilité pour cette authentification. Après que le capteur ait été authentifié comme étant un capteur valide, l'utilisateur du système est ensuite authentifié en utilisant ce capteur pour réaliser la ou les mesures d'authentification sur l'utilisateur, et en utilisant également une première clé de chiffrement calculée à partir des données de défi et des données de réponse du capteur obtenues lors de l'authentification du capteur, cette première clé de chiffrement étant partagée entre le calculateur et le capteur. Ainsi, le système électronique garantit non seulement que la mesure d'authentification est réalisée sur l'utilisateur par un capteur préalablement authentifié, et garantit également que les données échangées ensuite avec le capteur lors de l'authentification de l'utilisateur le sont de manière sécurisée grâce à la première clé de chiffrement utilisée.

Ainsi, le système électronique proposé permet par exemple d'atteindre un très haut niveau de confiance entre l'utilisateur et des informations affichées par le système, notamment dans des situations d'urgence, afin que l'utilisateur n'ai aucun doute sur la fiabilité de ces informations.

Le système électronique proposé peut notamment servir à contrer les menaces suivantes :
- un attaquant modifiant le capteur afin qu'il produise des données erronées ;
- un attaquant injectant des données factices vers le système électronique en se substituant à l'utilisateur (le système électronique pensant recevoir des mesures d'un utilisateur mais recevant celle d'un autre utilisateur ou des mesures faussées fictives) ou en prenant le contrôle de la liaison entre le capteur et le calculateur pour envoyer des données factices vers le capteur (pour provoquer une authentification de l'utilisateur par le capteur et par exemple réutiliser les données dans un autre contexte) ou vers le calculateur (par exemple pour permettre l'authentification d'un autre utilisateur) ;
- un attaquant extrayant des données confidentielles issues du capteur et les exploitant ensuite à l'insu de l'utilisateur ;
- un attaquant modifiant les données confidentielles issues du capteur pour leurrer le système.

Afin de garantir la sécurité des données traitées, le système électronique proposé respecte les règles généralement appelées règles C.I.A et qui sont :
- garantie de l'authenticité des données, c'est-à-dire garantie que les données proviennent d'un dispositif authentifié ou faisant partie d'un schéma d'authentification mutuelle (le dispositif est authentifié et le dispositif authentifie l'utilisateur) ;
- garantie de la confidentialité des données, c'est-à-dire qu'elles ne sont accessibles qu'aux personnes autorisées, et ceci pendant tout le cycle de vie du système ;
- garantie de l'intégrité des données, c'est-à-dire qu'elles ne sont pas altérées par malveillance, ni par défaillance.

Le capteur du système électronique correspond à un capteur biométrique ou un capteur couplé à un capteur biométrique (par exemple un capteur apportant une information complémentaire à un capteur biométrique dont il est possible d'extraire une information propre à un utilisateur, par exemple un accéléromètre, d'un gyroscope, etc.) configuré pour réaliser au moins une mesure d'au moins un paramètre propre à l'utilisateur, c'est-à-dire réaliser une mesure d'au moins un paramètre biochimique et/ou biophysique et qui ne soit pas reproductible par un autre utilisateur. A titre d'exemple, le capteur peut correspondre à un capteur d'empreinte.

Le système électronique peut être configuré pour mettre en oeuvre, préalablement à l'authentification de type défi-réponse du capteur, un enrôlement du capteur et/ou de l'utilisateur permettant l'obtention des données d'identification valide de l'utilisateur et des données d'identification valide du capteur. Par exemple, l'enrôlement du capteur peut consister à appliquer, en entrée de la PUF du capteur, différentes données de défi du capteur, et à mémoriser ensuite, dans le dispositif mémoire, les réponses générées par la PUF du capteur en fonction des données de défi appliquées en entrée de la PUF du capteur. Un tel enrôlement du capteur peut notamment être mis en oeuvre lorsque la PUF du capteur est de type « strong-PUF », ou PUF fort. En outre, l'enrôlement de l'utilisateur peut consister à réaliser plusieurs mesures d'authentification de l'utilisateur et à mémoriser les données correspondant à ces mesures d'authentification de l'utilisateur dans le dispositif mémoire.

La PUF du capteur peut appartenir à l'une des deux grandes familles de PUF que sont les « weak-PUF », ou PUF faible, et les « strong-PUF ».

Lorsque la PUF du capteur est de type « strong-PUF », le système électronique peut être configuré pour réaliser l'authentification de type défi-réponse du capteur en mettant en oeuvre les étapes suivantes :
- récupération, par le calculateur, des données de défi du capteur mémorisées dans le dispositif mémoire, puis
- envoi, du calculateur au capteur, des données de défi du capteur, puis
- envoi, du capteur au calculateur, des données de réponse du capteur générées par la PUF du capteur en ayant appliqué en entrée de la PUF les données de défi du capteur, puis
- envoi, du calculateur au dispositif mémoire, des données de réponse du capteur, puis
- comparaison des données de réponse du capteur et des données d'identification valide du capteur, le capteur étant authentifié comme étant valide si les données de réponse du capteur correspondent aux données d'identification valide du capteur.

Ainsi, lorsque la PUF du capteur est de type « strong-PUF », le calculateur peut envoyer un défi C au capteur qui génère, par sa PUF, une réponse R propre au défi C. Cette réponse R est ensuite envoyée au calculateur puis au dispositif mémoire pour comparaison avec la réponse attendue.

Lorsque la PUF du capteur est de type « weak-PUF », le système électronique peut être configuré pour réaliser l'authentification de type défi-réponse du capteur en mettant en oeuvre les étapes suivantes :
- envoi, du calculateur au capteur, des données de défi du capteur correspondant à une demande de données d'identification générées par la PUF du capteur, puis
- envoi, du capteur au calculateur, des données de réponse du capteur qui correspondent aux données d'identification générées par la PUF du capteur, puis
- envoi, du calculateur au dispositif mémoire, des données de réponse du capteur, puis
- comparaison des données de réponse du capteur et des données d'identification valide du capteur, le capteur étant authentifié comme étant valide si les données de réponse du capteur correspondent aux données d'identification valide du capteur.

Ainsi, si la PUF du capteur est de type « weak-PUF », le calculateur envoie au capteur une demande de ses données d'identification générées par la PUF (les données d'identification générées par la PUF du capteur correspondant par exemple à une clé unique générée par la PUF ou une information dérivée de cette clé). Ces données d'identification sont ensuite envoyées au calculateur puis au dispositif mémoire pour être comparées avec les données d'identification valide du capteur.

Le système électronique peut être configuré pour réaliser l'authentification de type défi-réponse de l'utilisateur en mettant en oeuvre les étapes suivantes :
- récupération, par le calculateur, de données de défi de l'utilisateur mémorisées dans le dispositif mémoire, puis
- envoi, du calculateur au capteur, des données de défi de l'utilisateur chiffrées en utilisant la première clé de chiffrement, puis
- mesure d'authentification de l'utilisateur par le capteur en utilisant les données de défi de l'utilisateur déchiffrées, puis
- envoi, du capteur au calculateur, de données de réponse de l'utilisateur correspondant à la mesure d'authentification de l'utilisateur par le capteur, chiffrées en utilisant la première clé de chiffrement, puis
- envoi, du calculateur au dispositif mémoire, des données de réponse de l'utilisateur déchiffrées, puis
- comparaison des données de réponse de l'utilisateur et des données d'identification valide de l'utilisateur, l'utilisateur étant authentifié comme étant valide si les données de réponse de l'utilisateur correspondent aux données d'identification valide de l'utilisateur.

Le système électronique peut être configuré pour :
- calculer, après l'authentification de type défi-réponse de l'utilisateur, une deuxième clé de chiffrement à partir des données de défi de l'utilisateur et des données de réponse de l'utilisateur, la deuxième clé de chiffrement étant partagée entre le calculateur et le capteur, puis
- calculer une troisième clé de chiffrement obtenue à partir des première et deuxième clés de chiffrement et partagée entre le calculateur et le capteur, puis
- échanger des données chiffrées entre le capteur et le calculateur en utilisant la troisième clé de chiffrement.

Le système électronique peut être configuré pour mettre en oeuvre, périodiquement ou non, et après une première authentification de type défi-réponse de l'utilisateur :
- une autre authentification de type défi-réponse du capteur, dans laquelle les données de réponse du capteur sont destinées à être générées par la PUF du capteur, et/ou
- une autre authentification de type défi-réponse de l'utilisateur, pendant laquelle les données échangées entre le calculateur et le capteur sont chiffrées en utilisant la première clé de chiffrement ou une autre clé de chiffrement calculée à partir des données de défi du capteur et des données de réponse du capteur obtenues lors d'une autre authentification de type défi-réponse du capteur.

Dans une configuration particulière, le dispositif mémoire peut comporter une base de données distante du capteur et du calculateur.

Le capteur et le calculateur peuvent faire partie d'un dispositif électronique correspondant à un smartphone, ou une montre électronique connectée à Internet, ou des lunettes de réalité étendue connectées à Internet.

L'invention porte également sur un procédé d'authentification de type défi-réponse d'un utilisateur, mis en oeuvre dans un système électronique tel que décrit ci-dessus.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 est une représentation schématique d'un système électronique, objet de la présente invention, selon un mode de réalisation particulier ;
- la figure 2 est une représentation schématique des éléments d'un capteur d'un système électronique, objet de la présente invention ;
- la figure 3 est un diagramme représentant les étapes mises en oeuvre lors d'une authentification d'un utilisateur par le système électronique, objet de la présente invention, selon un mode de réalisation particulier.

### DESCRIPTION DÉTAILLÉE DE L'INVENTION

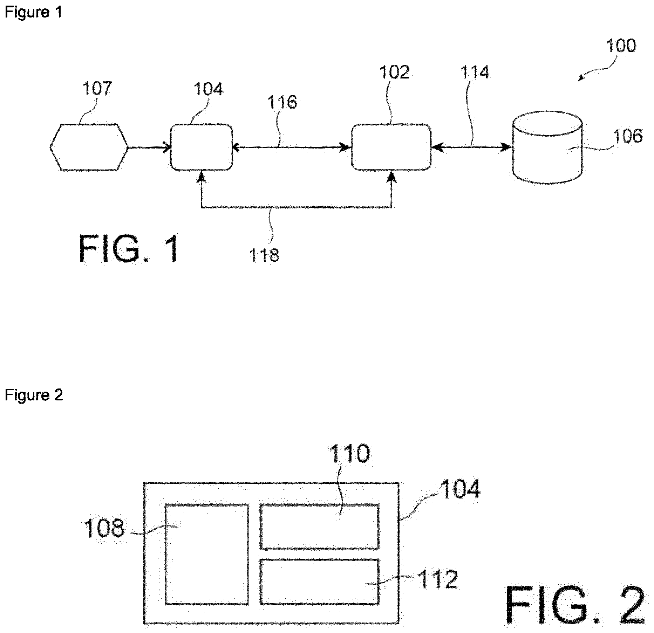

Un exemple de réalisation d'un système électronique 100 selon un mode de réalisation particulier est décrit ci-dessous en lien avec la figure 1.

Le système 100 comporte au moins les éléments suivants : un calculateur 102, un capteur 104 et un dispositif mémoire 106. Sur la figure 1, l'utilisateur est désigné par la référence 107.

Le calculateur 102 correspond par exemple à un CPU (« Central Processing Unit », ou unité centrale de traitement), un microcontrôleur, un processeur d'application, ou tout autre dispositif de calcul électronique.

Le capteur 104 est par exemple configuré pour réaliser au moins une mesure biométrique d'authentification de l'utilisateur du système 100 et comprend une PUF. Cette PUF est obtenue en utilisant un ou plusieurs composants électroniques du capteur 104. En variante, le capteur 104 peut correspondre à un capteur couplé à un capteur biométrique (par exemple un capteur apportant une information complémentaire à un capteur biométrique dont il est possible d'extraire une information propre à un utilisateur, par exemple un accéléromètre, d'un gyroscope, etc.).

Le capteur 104 comporte par exemple plusieurs éléments tels que schématisés sur la figure 2 :
- un dispositif de mesure 108 transformant l'information biophysique et/ou biochimique mesurée sur l'utilisateur en un signal électrique analogique ;
- une interface numérique 110 réalisant la mise en forme du signal analogique de mesure en un signal numérique et assurant la communication numérique de ce signal vers le calculateur 102 ;
- une mémoire volatile 112, avantageusement sécurisée contre des attaques physiques, qui permet de maintenir accessibles temporairement les informations nécessaires au traitement, à l'échange et/ou à la sécurisation de la mesure réalisée par le capteur 104.

Selon un exemple de réalisation particulier, le capteur 104 peut correspondre à un capteur biométrique comme par exemple un capteur d'empreinte digitale.

Le capteur 104 peut faire partie d'un dispositif incluant également le calculateur 102 et avec lequel l'utilisateur est destiné à s'authentifier ou à être authentifié, comme par exemple un smartphone, une montre électronique connectée à Internet ou des lunettes de réalité étendue connectées à Internet.

Selon un exemple de réalisation avantageux, le dispositif mémoire 106 peut correspondre à une base de données distante du capteur 104 et du calculateur 102. Dans ce cas, le dispositif mémoire 106 peut communiquer avec le calculateur 102 en passant par au moins un réseau de communication, par exemple Internet. En variante, le dispositif mémoire 106 peut correspondre à une mémoire locale faisant partie du dispositif incluant le capteur 104 et le calculateur 102 et communiquant par exemple avec le calculateur 102 sans passer par un réseau externe au dispositif.

En outre, le calculateur 102 communique avec le dispositif mémoire 106 par une liaison confidentielle 114, et avec le capteur 104 par une liaison confidentielle 116. Les liaisons confidentielles 114 et 116 correspondent à des canaux de communication sécurisés, filaires ou sans fil, qui sont protégés en terme de confidentialité et d'intégrité.

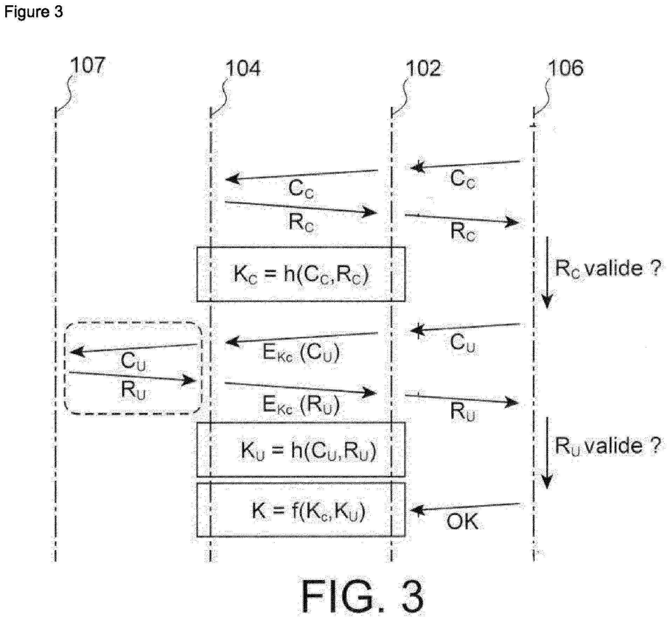

Une authentification de type défi-réponse de l'utilisateur, avec une authentification préalable de type défi-réponse du capteur 104 dans laquelle la réponse du capteur 104 est générée par la PUF du capteur 104, mises en oeuvre par le système 100 sont décrites ci-dessous. Une partie des échanges de données réalisés lors de ces authentifications sont représentés schématiquement sur la figure 3.

Avant de réaliser l'authentification du capteur 104, un enrôlement du capteur 104 et un enrôlement de l'utilisateur sont tout d'abord mis en oeuvre.

Lorsque la PUF du capteur 104 est de type « strong-PUF », l'enrôlement du capteur 104 est par exemple réalisé en envoyant de nombreuses données de défi différentes au capteur 104 et en enregistrant dans le dispositif mémoire 106 les données de réponse renvoyées par la PUF du capteur 104 lorsque ces données de défi sont appliquées en entrée de la PUF du capteur 104. Dans ce cas, l'enrôlement du capteur 104 peut correspondre à la construction, dans le dispositif mémoire 106, d'une table donnant, pour chacune des différentes données de défi du capteur, des données de réponse du capteur attendues pour chacune de ces données de défi.

Lorsque la PUF du capteur 104 est de type « weak-PUF », l'enrôlement du capteur 104 peut correspondre à une mémorisation, dans le dispositif mémoire 106, des données d'identification générées par la PUF du capteur 104 correspondant par exemple à une clé générée par la PUF ou une information dérivée de cette clé.

L'enrôlement de l'utilisateur est par exemple obtenu en réalisant différentes mesures par le capteur 104 et en enregistrant dans le dispositif mémoire 106 les données de réponse correspondant à ces mesures d'authentification de l'utilisateur.

L'authentification du capteur 104 est ensuite mise en oeuvre. Lorsque la PUF du capteur 104 est de type « strong-PUF », le calculateur 102 demande au dispositif mémoire 106 de fournir, parmi toutes les données de défi du capteur 104 mémorisées et via la liaison confidentielle 114, des données de défi du capteur, appelées Ce sur la figure 3, permettant de mettre en oeuvre un défi du capteur 104. Ces données de défi du capteur correspondent par exemple à des données de calibration avec lesquelles le capteur 104 peut faire une mesure de référence, ou bien une mesure de paramètres (par exemple de défauts) propres au capteur 104 pendant sa chaîne de fabrication. Les données de défi du capteur Ce sont ensuite envoyées par le calculateur 102 au capteur 104. Les données de défi du capteur Ce sont soumises en entrée du capteur 104 afin que la PUF du capteur 104 génère des données de réponse du capteur, appelées R_{C} sur la figure 3. Les données de réponse du capteur R_{C} sont propres aux données de défi du capteur C_{C} utilisées pour le défi appliqué au capteur 104. Les données de réponse du capteur R_{C} sont envoyées au calculateur 102 qui les retransmet au dispositif mémoire 106. L'authenticité du capteur 104 est vérifiée par le dispositif mémoire 106 en comparant les données de réponse du capteur R_{C} avec la réponse attendue, également appelée données d'identification valide du capteur et qui correspond aux données de réponse obtenue lors de l'enrôlement du capteur 102 lorsque ces données de défi du capteur Cc ont été appliquées en entrée de la PUF du capteur 104.

Lorsque la PUF du capteur 104 est de type « weak-PUF », le calculateur 102 envoie au capteur 104 les données de défi du capteur Ce qui correspondent dans ce cas à une demande de données d'identification générées par la PUF du capteur 104. Cette demande d'identification est soumise en entrée du capteur 104 afin que la PUF du capteur 104 génère les données de réponse du capteur Rc qui correspondent par exemple à une clé générée par la PUF ou une information dérivée de cette clé. Les données de réponse du capteur Rc sont envoyées du capteur 104 au calculateur 102, puis au dispositif mémoire 106. L'authenticité du capteur 104 est ensuite vérifiée en comparant les données de réponse du capteur Rc avec la réponse attendue obtenue lors de l'enrôlement du capteur 102.

Si le capteur 104 est authentifié, le processus peut continuer.

A ce stade, une première clé de chiffrement, appelée Kc sur la figure 3, est calculée, par exemple avec une fonction de condensat h prenant en paramètre les données de défi du capteur Ce et les données de réponse du capteur Rc. Cette fonction de condensat réalise par exemple une concaténation des données Cc et Rc et une fonction de condensat par exemple de type SHA-256. Sur la figure 1, la liaison sécurisée formée entre le calculateur 102 et le capteur 104 et faisant appel à la première clé de chiffrement Kc est désignée symboliquement par la référence 118. Ainsi, après l'authentification du capteur 104, les échanges de données entre le capteur 104 et le calculateur 102 peuvent être réalisées à travers la liaison sécurisée 118 à la place de la liaison confidentielle 116.

Après l'authentification du capteur 104, l'authentification de type défi-réponse de l'utilisateur est mise en oeuvre, pendant laquelle des données échangées entre le calculateur 102 et le capteur 104 sont chiffrées en utilisant la première clé de chiffrement K_{C} partagée entre le calculateur 102 et le capteur 104.

Pour cela, le calculateur 102 récupère des données de défi de l'utilisateur, appelées Cu sur la figure 3, mémorisées dans le dispositif mémoire 106 et faisant partie des données d'identification valide de l'utilisateur obtenues précédemment lors de l'enrôlement de l'utilisateur. Par exemple, dans le cas d'un capteur 104 correspondant à un capteur d'empreinte, les données de défi de l'utilisateur peuvent correspondre à un signal commandant l'illumination du doigt de l'utilisateur par le capteur 104. Les données Cu sont ensuite transmises au capteur 104 en utilisant la liaison sécurisée 118, c'est-à-dire en chiffrant ces données avec la première clé de chiffrement K_{C}. Sur la figure 3, les données Cu chiffrées avec la clé K_{C} sont appelées E_{KC}(C_{U}). Le capteur 104 déchiffre le message reçu pour reconstituer les données C_{U} non chiffrées. Une mesure d'authentification de l'utilisateur 107 par le capteur 104 est ensuite réalisée, puis les données de réponse de l'utilisateur, appelées R_{U} sur la figure 3, correspondant à la mesure d'authentification de l'utilisateur 107 par le capteur 104, sont envoyées depuis le capteur 104 au calculateur 102. Pour cette transmission, les données R_{U} sont chiffrées en utilisant la première clé de chiffrement K_{C}, ces données chiffrées étant appelées E_{KC}(R_{U}) sur la figure 3. Les données R_{U} sont déchiffrées par le calculateur 102, puis transmises au dispositif mémoire 106 et comparées avec les données de réponse attendues, c'est-à-dire les données d'identification valide de l'utilisateur. L'utilisateur est authentifié comme étant valide si les données Ru correspondent aux données d'identification valide de l'utilisateur.

Après l'authentification de type défi-réponse de l'utilisateur, une deuxième clé de chiffrement Ku peut être calculée à partir des données de défi de l'utilisateur Cu et des données de réponse de l'utilisateur R_{U}, par exemple avec la fonction de hachage h prenant en paramètres les données Cu et R_{U}. Ainsi, le calculateur 102 et le capteur 104 partagent une clé K_{C} propre au couple capteur/calculateur et une clé Ku propre au couple utilisateur/calculateur.

Une troisième clé de chiffrement K peut ensuite être calculée à partir des première et deuxième clés de chiffrement Kc, Ku et partagée entre le calculateur 102 et le capteur 104. Cette troisième clé K est par exemple obtenue en réalisant un condensat des deux clés Kc, Ku concaténées, ou en réalisant une opération de type « ou exclusif » entre les deux clés Kc, Ku. D'autres manières de calculer la clé K sont possibles. La troisième clé K calculée peut ensuite être utilisée pour échanger des données chiffrées entre le capteur 104 et le calculateur 102, et garantir la confidentialité des données dans la chaîne de traitement du système 100. La clé K peut être utilisée pour chiffrer les données stockées issues du capteur 104, cette clé K étant donc requise pour déchiffrer les données chiffrées issues du capteur 104.

Dans un mode de réalisation particulier, le calculateur 102 peut utiliser un code correcteur afin de pouvoir régénérer la clé de chiffrement utilisée pour chiffrer les données échangées entre le capteur 104 et le calculateur 102, en cas de perturbations. Par exemple, un élément de type « helper data », comme par exemple décrit dans le document de Jeroen Delvaux et al., « Helper Data Algorithms for PUF-Based Key Génération: Overview and Analysis », 2015, peut être inclus le calculateur 102 et le capteur 104 pour être capable de corriger la donnée extraite en cas de perturbation.

Dans le calculateur 102, il est possible qu'une routine sécurisée soit exécutée pour interfacer le calculateur 102 avec le capteur 104 et ensuite générer la clé de chiffrement K de façon sécurisée. L'utilisation d'enclave sécuritaire de type « Trust Execution Environment » (TEE) peut ainsi permettre la génération, le stockage et l'utilisation de cette clé de façon sécurisée. Dans le capteur 104, un circuit numérique dédié peut être associé dans un circuit intégré du capteur 104 pour extraire les données d'authentification et générer la clé de chiffrement K qui est stockée dans un registre interne ou une mémoire sécurisée du capteur 104.

Le système électronique 100 peut être configuré pour mettre en oeuvre, périodiquement ou non, et après une première authentification de type défi-réponse de l'utilisateur :
- une autre authentification de type défi-réponse du capteur 104, dans laquelle les données de réponse du capteur sont destinées à être générées par la PUF du capteur 104, et/ou
- une autre authentification de type défi-réponse de l'utilisateur, pendant laquelle les données échangées entre le calculateur 102 et le capteur 104 sont chiffrées en utilisant la première clé de chiffrement K_{C} ou une autre clé de chiffrement calculée à partir des données de défi du capteur et des données de réponse du capteur générées obtenues lors de ladite autre authentification de type défi-réponse du capteur.

Ainsi, la sécurité du système 100 est améliorée du fait que l'authenticité du capteur 104 et/ou de l'utilisateur est vérifiée de nouveau après la première authentification de l'utilisateur.

## Revendications

1. Système électronique (100) configuré pour réaliser une authentification de type défi-réponse d'un utilisateur (107) et d'un capteur (104), comprenant au moins :
- le capteur (104) qui est configuré pour réaliser au moins une mesure d'authentification de l'utilisateur (107) et comprenant une PUF ;
- un dispositif mémoire (106) configuré pour mémoriser au moins des données d'identification valide de l'utilisateur (107) et des données d'identification valide du capteur (104) destinées à être obtenues préalablement à l'authentification de type défi-réponse de l'utilisateur (107) ;
- un calculateur (102) configuré pour communiquer avec le capteur (104) et le dispositif mémoire (106), et pour traiter des données destinées à être envoyées par le capteur (104) et le dispositif mémoire (106) au calculateur (102) ;
**caractérisé en ce que** le système électronique (100) est configuré pour :
- mettre en oeuvre l'authentification de type défi-réponse du capteur (104), dans laquelle des données de réponse du capteur (104) sont destinées à être générées par la PUF du capteur (104), puis
- lorsque le capteur (104) est authentifié comme étant valide, mettre en oeuvre l'authentification de type défi-réponse de l'utilisateur (107), pendant laquelle des données destinées à être échangées entre le calculateur (102) et le capteur (104) sont chiffrées en utilisant une première clé de chiffrement calculée à partir de données de défi du capteur (104) et des données de réponse du capteur (104), la première clé de chiffrement étant destinée à être partagée entre le calculateur (102) et le capteur (104).

2. Système électronique (100) selon la revendication 1, dans lequel le système électronique (100) est configuré pour mettre en oeuvre, préalablement à l'authentification de type défi-réponse du capteur (104), un enrôlement du capteur (104) et/ou de l'utilisateur (107) permettant l'obtention des données d'identification valide de l'utilisateur (107) et des données d'identification valide du capteur (104).

3. Système électronique (100) selon l'une des revendications précédentes, dans lequel le système électronique (100) est configuré pour réaliser l'authentification de type défi-réponse du capteur (104) en mettant en oeuvre les étapes suivantes :
- récupération, par le calculateur (102), des données de défi du capteur (104) mémorisées dans le dispositif mémoire (106), puis
- envoi, du calculateur (102) au capteur (104), des données de défi du capteur (104), puis
- envoi, du capteur (104) au calculateur (102), des données de réponse du capteur (104) générées par la PUF du capteur (104) en ayant appliqué en entrée de la PUF les données de défi du capteur (104), puis
- envoi, du calculateur (102) au dispositif mémoire (106), des données de réponse du capteur (104), puis
- comparaison des données de réponse du capteur (104) et des données d'identification valide du capteur (104), le capteur (104) étant authentifié comme étant valide si les données de réponse du capteur (104) correspondent aux données d'identification valide du capteur (104).

4. Système électronique (100) selon l'une des revendications 1 ou 2, dans lequel le système électronique (100) est configuré pour réaliser l'authentification de type défi-réponse du capteur (104) en mettant en oeuvre les étapes suivantes :
- envoi, du calculateur (102) au capteur (104), des données de défi du capteur (104) correspondant à une demande de données d'identification générées par la PUF du capteur (104), puis
- envoi, du capteur (104) au calculateur (102), des données de réponse du capteur (104) qui correspondent aux données d'identification générées par la PUF du capteur (104), puis
- envoi, du calculateur (102) au dispositif mémoire (106), des données de réponse du capteur (104), puis
- comparaison des données de réponse du capteur (104) et des données d'identification valide du capteur (104), le capteur (104) étant authentifié comme étant valide si les données de réponse du capteur (104) correspondent aux données d'identification valide du capteur (104).

5. Système électronique (100) selon l'une des revendications précédentes, dans lequel le système électronique (100) est configuré pour réaliser l'authentification de type défi-réponse de l'utilisateur (107) en mettant en oeuvre les étapes suivantes :
- récupération, par le calculateur (102), de données de défi de l'utilisateur (107) mémorisées dans le dispositif mémoire (106), puis
- envoi, du calculateur (102) au capteur (104), des données de défi de l'utilisateur (107) chiffrées en utilisant la première clé de chiffrement, puis
- mesure d'authentification de l'utilisateur (107) par le capteur (104) en utilisant les données de défi de l'utilisateur (107) déchiffrées, puis
- envoi, du capteur (104) au calculateur (102), de données de réponse de l'utilisateur (107) correspondant à la mesure d'authentification de l'utilisateur (107) par le capteur (104), chiffrées en utilisant la première clé de chiffrement, puis
- envoi, du calculateur (102) au dispositif mémoire (106), des données de réponse de l'utilisateur (107) déchiffrées, puis
- comparaison des données de réponse de l'utilisateur (107) et des données d'identification valide de l'utilisateur (107), l'utilisateur (107) étant authentifié comme valide si les données de réponse de l'utilisateur (107) correspondent aux données d'identification valide de l'utilisateur (107).

6. Système électronique (100) selon l'une des revendications précédentes, dans lequel le système électronique (100) est configuré pour :
- calculer, après l'authentification de type défi-réponse de l'utilisateur (107), une deuxième clé de chiffrement à partir des données de défi de l'utilisateur (107) et des données de réponse de l'utilisateur (107), la deuxième clé de chiffrement étant partagée entre le calculateur (102) et le capteur (104), puis
- calculer une troisième clé de chiffrement à partir des première et deuxième clés de chiffrement et partagée entre le calculateur (102) et le capteur (104), puis
- échanger des données chiffrées entre le capteur (104) et le calculateur (102) en utilisant la troisième clé de chiffrement.

7. Système électronique (100) selon l'une des revendications précédentes, dans lequel le système électronique (100) est configuré pour mettre en oeuvre, périodiquement ou non, et après une première authentification de type défi-réponse de l'utilisateur (107) :
- une autre authentification de type défi-réponse du capteur (104), dans laquelle les données de réponse du capteur (104) sont destinées à être générées par la PUF du capteur (104), et/ou
- une autre authentification de type défi-réponse de l'utilisateur (107), pendant laquelle les données échangées entre le calculateur (102) et le capteur (104) sont chiffrées en utilisant la première clé de chiffrement ou une autre clé de chiffrement calculée à partir des données de défi du capteur (104) et des données de réponse du capteur (104) obtenues lors de ladite autre authentification de type défi-réponse du capteur (104).

8. Système électronique (100) selon l'une des revendications précédentes, dans lequel le dispositif mémoire (106) comporte une base de données distante du capteur (104) et du calculateur (102).

9. Système électronique (100) selon l'une des revendications précédentes, dans lequel le capteur (104) et le calculateur (102) font partie d'un dispositif électronique (100) correspondant à un smartphone, ou une montre électronique connectée à Internet, ou des lunettes de réalité étendue connectées à Internet.

10. Procédé d'authentification de type défi-réponse d'un utilisateur (107), mis en oeuvre dans un système électronique (100) selon l'une des revendications précédentes.
